(19) Europäisches Patentamt
European Patent Office
Office européen des brevets

(11) **EP 4 764 966 A1**

(12) **EUROPEAN PATENT APPLICATION**
published in accordance with Art. 153(4) EPC

(43) Date of publication:
**24.06.2026 Bulletin 2026/26**

(21) Application number: **24864224.1**

(22) Date of filing: **04.07.2024**

(51) International Patent Classification (IPC):
**G06N 5/04** (2023.01)   **G06N 3/08** (2023.01)
**G06N 3/06** (2006.01)   **G06N 3/048** (2023.01)

(52) Cooperative Patent Classification (CPC):
**G06N 3/048; G06N 3/06; G06N 3/08; G06N 3/088; G06N 5/04**

(86) International application number:
**PCT/CN2024/103661**

(87) International publication number:
**WO 2025/055499 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.09.2023   CN 202311185090**

(71) Applicant: **HUAWEI TECHNOLOGIES CO., LTD.**
**Shenzhen 518129 (CN)**

(72) Inventors:
• **LIN, Jing**
**Shenzhen, Guangdong 518129 (CN)**
• **YAO, Yiwu**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **DATA-FREE POST-TRAINING QUANTIZATION METHOD AND APPARATUS, DEVICE, AND STORAGE MEDIUM**

(57)     This application provides a data-free post-training quantization method and apparatus, a device, and a storage medium, and relates to the field of neural network technologies. The method includes: obtaining data distribution input by a user, where the data distribution is distribution to which an input activation value of each network layer of a floating-point model conforms; inputting random data into the floating-point model to obtain the input activation value of each network layer; performing statistical analysis on the input activation value of each network layer based on the data distribution, to obtain a data range of the input activation value of each network layer; determining a quantization parameter of the input activation value of each network layer based on endpoint values of the data range; and during inference by using the floating-point model, performing, by using the quantization parameter of the input activation value of each network layer, quantization processing on the input activation value generated during inference of each network layer. According to the solution of this application, quantization processing can be performed on an input activation value in a data-free manner.

FIG. 5

## Description

## TECHNICAL FIELD

This application relates to the field of neural network technologies, and in particular, to a data-free post-training quantization method and apparatus, a device, and a storage medium.

## BACKGROUND

Post-training quantization (post-training quantization, PTQ) is a common deep learning model compression method that converts floating-point parameters in a model into fixed-point parameters after model training. During inference, for a quantized model, a calculation amount of the model can be reduced, and inference performance is effectively improved. During post-training quantization, quantization parameters of input activation values in the floating-point model need to be calculated by using a standard dataset. However, the standard dataset usually involves user privacy and is usually unavailable. Therefore, the standard dataset may fail to be used to quantize the input activation values in the floating-point model.

In the related technology, a data generation-based data-free post-training quantization algorithm is provided. In the method, a data generation model is trained by mining information about a training dataset in a floating-point model, a dataset is generated by using the data generation model, and quantization parameters of input activation values are calculated based on the dataset.

Because a data generation model needs to be trained before post-training quantization, training overheads are large, and therefore resource consumption is high.

## SUMMARY

This application provides a data-free post-training quantization method and apparatus, a device, and a storage medium, where a standard dataset and training of a data generation model are not needed, so that resources can be saved during quantization of a floating-point model.

According to a first aspect, this application provides a data-free post-training quantization method. The method includes: obtaining data distribution input by a user, where the data distribution is distribution to which an input activation value of each network layer of a floating-point model conforms; inputting random data into the floating-point model to obtain the input activation value of each network layer; performing statistical analysis on the input activation value of each network layer based on the data distribution, to obtain a data range of the input activation value of each network layer; determining a quantization parameter of the input activation value of each network layer based on endpoint values of the data range; and during inference by using the floating-point model, performing, by using the quantization parameter of the input activation value of each network layer, quantization processing on the input activation value generated during inference of each network layer.

In the solution shown in this application, the user provides the data distribution of the input activation value, and the random data is used as an input of the floating-point model, so that the quantization parameter of the input activation value can be determined, and the input activation value of the floating-point model is quantized. Therefore, there is no need to train a data generation model, and resource consumption can be reduced.

In an optional manner, for each network layer of the floating-point model, an initial value of the quantization parameter of the input activation value of the network layer is first determined based on the endpoint values of the data range of the input activation value of the network layer; then quantization processing is performed on the input activation value of the network layer based on the initial value of the quantization parameter, to obtain a quantized input activation value; a quantization error of the input activation value of the network layer is determined based on the quantized input activation value and the input activation value of the network layer; and the initial value of the quantization parameter of the input activation value of the network layer is updated until the quantization error of the input activation value of the network layer is less than or equal to a target value or is minimized, to obtain a value of the quantization parameter of the input activation value of the network layer. In this way, the value of the quantization parameter can be obtained by using the quantization error as a constraint condition.

In an optional manner, when the quantization parameter includes a scale factor and a quantization offset, the scale factor and the quantization offset are updated in an alternate update manner, and processing is as follows: when the scale factor is an initial value, updating the quantization offset until the quantization error of the input activation value of the network layer is less than or equal to the target value or is minimized, to obtain a value of the quantization offset; and when update of the quantization offset is completed, updating the scale factor until the quantization error of the input activation value of the network layer is less than or equal to the target value or is minimized, to obtain a value of the scale factor.

In an optional manner, in the method, quantization processing can be further performed on weight values in the

EP 4 764 966 A1

floating-point model. Processing is as follows: for each group of the floating-point model, determining a quantization parameter corresponding to the group; and performing quantization processing on a weight value in the group based on the quantization parameter corresponding to the group, to obtain a quantized value of the weight value in the group. This can further reduce storage resources occupied by the floating-point model and save compute resources. In addition, the quantization parameter is determined based on the group, so that the quantization parameter can be quickly determined.

In an optional manner, when quantization processing is performed on the weight values in the floating-point model, based on groups of the weight values, a rounding direction of a weight value with a large quantization error is adjusted, and processing is as follows: determining disturbance tensors corresponding to to-be-adjusted weight values in the group during quantization rounding, where the to-be-adjusted weight values are first K weight values sorted in descending order of quantization errors during quantization in the group, and the disturbance tensor is used to adjust a rounding direction during quantization rounding of the to-be-adjusted weight values; determining a ratio of the to-be-adjusted weight value to a corresponding scale factor; and performing rounding processing on a sum of the ratio and the disturbance tensor to obtain a rounding result, and in a case of asymmetric quantization, updating a sum of the rounding result and a quantization offset corresponding to the to-be-adjusted weight value to a quantized value of the to-be-adjusted weight value, or in a case of symmetric quantization, updating the rounding result to a quantized value of the to-be-adjusted weight value. In this way, the quantization error can be further reduced.

In an optional manner, the method further includes: grouping weight values in the floating-point model based on channels to which the weight values belong, where weight values in a same channel belong to one group.

According to a second aspect, this application provides a data-free post-training quantization apparatus. The apparatus has a function of implementing the first aspect. The apparatus includes at least one module, and the at least one module is configured to implement the data-free post-training quantization method provided in the first aspect.

In some embodiments, the module in the data-free post-training quantization apparatus is implemented by using software, and the module in the apparatus is a program module. In some other embodiments, the module in the apparatus is implemented by using hardware or firmware.

According to a third aspect, this application provides a compute device. The compute device includes a processor and a storage. The storage stores computer instructions, and the processor executes the computer instructions to implement the method according to the first aspect and the optional implementations of the first aspect.

According to a fourth aspect, this application provides a computer-readable storage medium. The computer-readable storage medium stores computer instructions. When the computer instructions in the computer-readable storage medium are executed by a compute device, the compute device is caused to perform the method according to the first aspect and the optional implementations of the first aspect.

According to a fifth aspect, this application provides a computer program product including instructions. When the computer program product runs on a compute device, the compute device is caused to perform the method according to the first aspect and the optional implementations of the first aspect.

## BRIEF DESCRIPTION OF DRAWINGS

FIG. 1 is a diagram of a system architecture according to an example embodiment of this application;
FIG. 2 is a diagram of a system architecture according to an example embodiment of this application;
FIG. 3 is a diagram of a structure of a compute device according to an example embodiment of this application;
FIG. 4 is a schematic flowchart of a post-training quantization method according to an example embodiment of this application;
FIG. 5 is a schematic flowchart of input activation value quantization according to an example embodiment of this application;
FIG. 6 is a schematic flowchart of optimizing a manner of rounding a weight value according to an example embodiment of this application; and
FIG. 7 is a diagram of a structure of a data-free post-training quantization apparatus according to an example embodiment of this application.

## DESCRIPTION OF EMBODIMENTS

To make objectives, technical solutions, and advantages of this application clearer, the following further describes implementations of this application in detail with reference to the accompanying drawings.

The following explains and describes some terms and concepts in embodiments of this application.

1. Model quantization (model quantization) is a process of directly converting a floating-point model into a fixed-point

3

integer calculation model. For example, a floating-point model whose data type is single-precision floating-point (single-precision floating-point, FP32) or half-precision floating-point (half-precision floating-point, FP16) is converted into an integer model whose data type is 8-bit integer (int8). For a quantized model, a calculation amount of the model can be reduced, an inference speed is effectively increased, and memory usage can be further reduced. In this way, a deep learning model can be deployed on a device with a small memory.

2. Post-training quantization is a common deep learning model compression method. After model training, floating-point parameters in a model are converted into fixed-point parameters. During conversion, used quantization parameters need to be calibrated or optimized to ensure that a precision loss obtained through model quantization meets a requirement.

3. Data-free post-training quantization (data-free PTQ) is a method that can directly perform post-training quantization on a floating-point model without requiring a user to provide a standard dataset.

The following describes the background of embodiments of this application.

Deep learning has a wide range of applications and practical needs in many fields, such as language recognition, image processing, and self-driving. Some scenarios, such as self-driving, have strict requirements on a latency and memory usage of deep learning model inference. Therefore, post-training quantization needs to be performed on a deep learning model to obtain a deep learning model with a low latency and low memory usage. During post-training quantization, quantization parameters of input activation values in the deep learning model need to be calculated by using a standard dataset. However, the standard dataset generally involves user privacy and is usually unavailable. Therefore, the standard dataset may fail to be used to quantize the input activation values in the deep learning model. Based on this, a data-free post-training quantization method emerges. The method is used for model quantization in a scenario in which a user does not provide data, and is more widely used than a common model quantization method.

Embodiments of this application provide a data-free post-training quantization method. In the method, a standard dataset and training of a data generation model are not needed, so that data-free post-training quantization can be performed on a floating-point model, and resources can be saved.

The following specifically describes the technical solutions provided in embodiments of this application based on an execution entity of the data-free post-training quantization method, a system architecture, a hardware structure of a device in the system architecture, and a method procedure.

The following describes the execution entity of the data-free post-training quantization method.

The data-free post-training quantization method is performed by a data-free post-training quantization apparatus, which is referred to as a quantization apparatus for short. Optionally, the quantization apparatus is a hardware apparatus, and the hardware apparatus is a compute device like a terminal device or a server. Optionally, the quantization apparatus is a software apparatus, for example, a set of software programs running on the hardware apparatus.

The following describes system architectures provided in embodiments of this application.

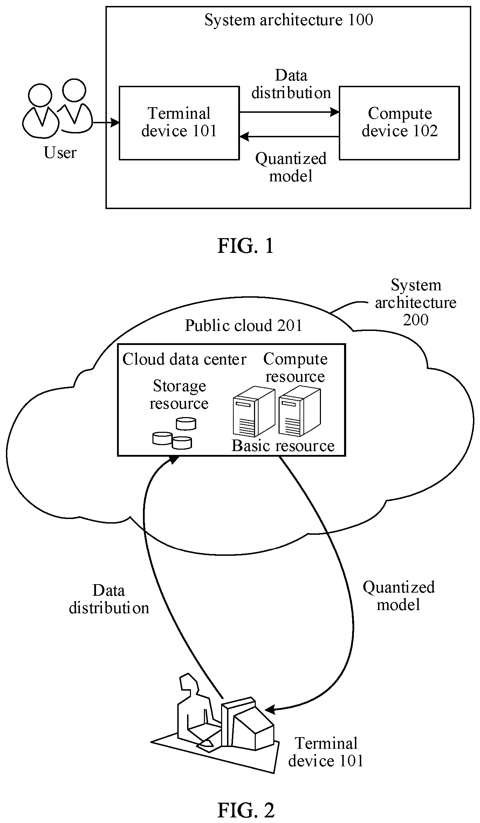

In an optional manner, an embodiment of this application provides a system architecture 100. As shown in FIG. 1, the system architecture 100 includes a terminal device 101 and a compute device 102. The terminal device 101 is connected to the compute device 102 via a wired or wireless network. The terminal device 101 is a device used by a user, for example, a desktop computer, a notebook computer, or a tablet computer. The terminal device 101 is used by the user to interact with the compute device 102. For example, the user may input data distribution and the like through the terminal device 101. The compute device 102 may be a server or the like. The compute device 102 is configured to perform quantization processing on a pre-trained floating-point model by using the data distribution, and return a quantized model to the terminal device 101.

In another optional manner, an embodiment of this application provides another system architecture 200. As shown in FIG. 2, the system architecture 200 includes a terminal device 101 and a public cloud 201. The terminal device 101 is connected to the public cloud 201 via a wired or wireless network. The terminal device 101 is a device used by a user, and the terminal device 101 is used by the user to interact with the public cloud 201. The public cloud 201 is an entity that provides a cloud service for the user by using a basic resource in a cloud computing mode, and the public cloud 201 may also be considered as a cloud environment. The public cloud 201 includes a cloud data center. The cloud data center includes a large quantity of basic resources owned by a cloud service provider. The large quantity of basic resources include compute resources, storage resources, and network resources. The compute resources included in the cloud data center may be a compute device cluster. The compute device cluster includes at least one compute device 102. The compute device 102 may be a server or the like. When the user uses the cloud service, the user may input data distribution to the public cloud 201 through an API or an interaction interface (where the interaction interface may be a graphical user interface (graphical user interface, GUI)). A compute device in the public cloud 201 receives a pre-trained floating-point model and the data distribution that are input by the user, performs quantization processing on the pre-trained floating-point model by using the data distribution, and returns a quantized model to the terminal device 101.

In the system architecture 200, a data-free post-training quantization method may be abstracted by the cloud service provider into a cloud service in the public cloud 201 and provided for the user. After obtaining permission to use the cloud service, the user may use the cloud service to perform data-free post-training quantization.

In still another optional manner, an embodiment of this application further provides a system architecture. The system architecture includes a terminal device, and the terminal device is a device used by a user. The terminal device performs a data-free post-training quantization method in embodiments of this application.

The following describes a hardware structure of a device.

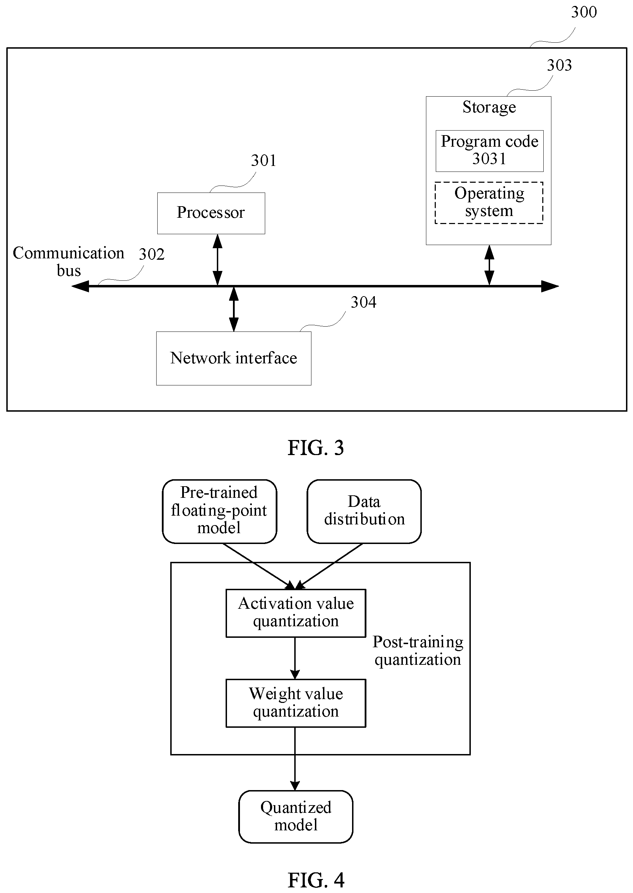

As shown in FIG. 3, the device 300 is optionally implemented by using a general bus architecture. The device 300 includes at least one processor 301, a communication bus 302, a storage 303, and at least one network interface 304. The device 300 is the terminal device 101 and the compute device 102 described above.

The processor 301 is, for example, a central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 301 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof.

The communication bus 302 is configured to transfer information between the foregoing components. The communication bus 302 may include an address bus, a data bus, a control bus, and the like. For ease of representation, only one bold line is used in FIG. 3 for representation, but this does not mean that there is only one bus or only one type of bus.

The storage 303 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the storage 303 exists independently, and is connected to the processor 301 through the communication bus 302. The storage 303 may alternatively be integrated with the processor 301.

Optionally, the storage 303 is configured to store a pre-trained floating-point model. When the device 300 needs to use the floating-point model, the processor 301 accesses the storage 303, to obtain the floating-point model stored in the storage 303.

The network interface 304 uses any apparatus of a transceiver type to communicate with another device or a communication network. The network interface 304 includes a wired network interface, or may include a wireless network interface. The wired network interface may be, for example, an ethernet interface. The ethernet interface may be an optical interface, an electrical interface, or a combination thereof. The wireless network interface may be a wireless local area network (wireless local area network, WLAN) interface, a network interface of a cellular network, a combination thereof, or the like.

During specific implementation, in an example, the processor 301 may include one or more CPUs.

During specific implementation, in an embodiment, the device 300 may include a plurality of processors. Each of the processors may be a single-core processor (single-CPU) or a multi-core processor (multi-CPU). The processor herein may be one or more devices, circuits, and/or processing cores configured to process data (for example, computer program instructions).

In some embodiments, the storage 303 is configured to store program code 3031 for performing data-free post-training quantization in this application, and the processor 301 executes the program code 3031 stored in the storage 303. In other words, the device 300 may implement, by using the processor 301 and the program code 3031 in the storage 303, a data-free post-training quantization method provided in method embodiments.

The following describes a procedure of a post-training quantization method with reference to FIG. 4 to FIG. 6.

During post-training quantization, a quantized value of a weight value may be represented as $W_q = W + \Delta W$, where $W$ represents a value of the weight value before quantization, and $\Delta W$ represents a difference obtained by subtracting the value of the weight value before quantization from the quantized value. A quantized value of an input activation value is represented as $A_q = A + \Delta A$, where $A$ represents a value of the input activation value before quantization, $\Delta A$ represents a difference obtained by subtracting the value of the input activation value before quantization from the quantized value, and a finally calculated value obtained through quantization is represented as Formula (1).

$$W_q A_q = WA + A\Delta W + W\Delta A + \Delta W \Delta A \qquad (1)$$

During quantization, an objective is to minimize a quantization error, and is represented as Formula (2). Alternatively, during quantization, an objective is to constrain a quantization error to be less than or equal to a specific value.

$$\min_{\Delta A, \Delta W} \left| W_q A_q - WA \right| \qquad (2)$$

In embodiments of this application, the quantization error is used as an optimization objective. With reference to Formula (1) and Formula (2), it can be learned that the quantization error is mainly generated during input activation value quantization and weight value quantization. Therefore, in embodiments of this application, for a quantization requirement in a data-free scenario, input activation value quantization and weight value quantization are separately performed, to minimize the quantization error or constrain the quantization error to be less than or equal to a specific value.

It can be learned from the foregoing descriptions that post-training quantization includes two parts: input activation value quantization and weight value quantization. Refer to FIG. 4. During input activation value quantization, an input of post-training quantization includes a pre-trained floating-point model and data distribution. The pre-trained floating-point model is a deep learning model that has been trained, and a data type of a parameter in the deep learning model is a floating-point type. The deep learning model includes a deep learning model in a scenario like speech recognition, text recognition, image processing, or vehicle driving. This is not limited in embodiments of this application. The data type in the pre-trained floating-point model is any floating-point type, for example, FP32, FP16, or FP64. The floating-point model includes a plurality of network layers that are sequentially connected. For example, the network layers of the floating-point model may include a convolution layer, a fully connected layer, a pooling layer, and the like. Different floating-point models may include different network layers. The plurality of network layers included in the floating-point model correspond to an application scenario of the floating-point model. For example, the floating-point model is a deep learning model for text recognition, and the plurality of network layers include an embedding layer, a convolution layer, a fully connected layer, and the like. The data distribution is distribution statistics of the input activation value. For example, the data distribution is normal distribution. During weight value quantization, an input of post-training quantization includes a pre-trained floating-point model, and there is no sequence between input activation value quantization and weight value quantization. Input activation value quantization may be performed first, or weight value quantization may be performed first. This is not limited in embodiments of this application. FIG. 4 shows that input activation value quantization is performed first, and then weight value quantization is performed. After input activation value quantization and weight value quantization, a quantized model is output.

The following separately describes an input activation value quantization process and a weight value quantization process.

1. Activation value quantization process: The quantization process includes an input activation value quantization process and a process of optimizing a rounding manner.

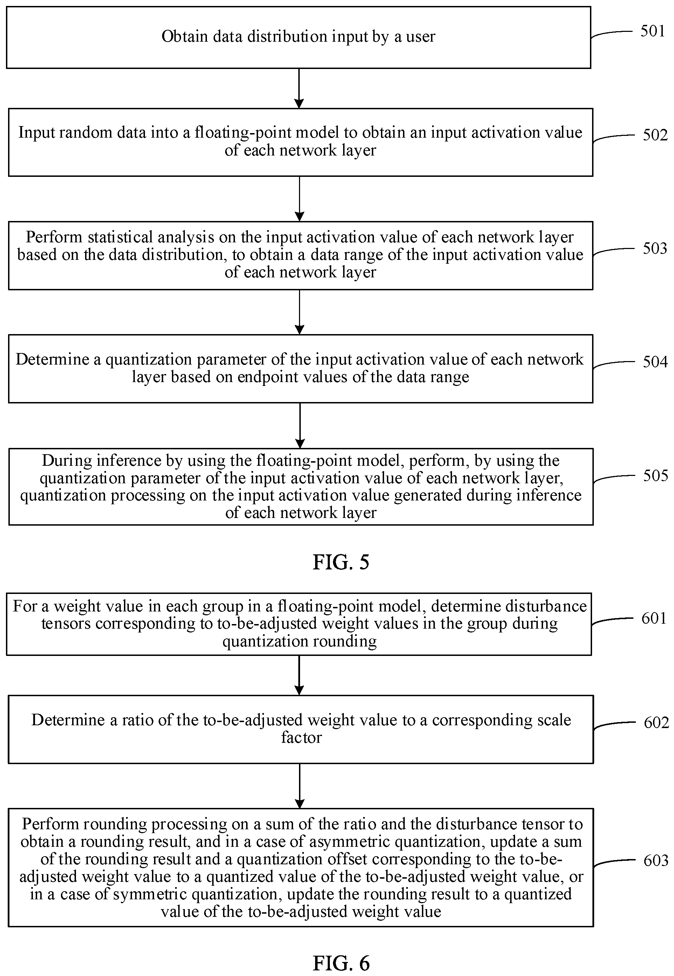

1.1. For the input activation value quantization process, refer to step 501 to step 505 in FIG. 5. A procedure shown in FIG. 5 is described by using the system architecture shown in FIG. 2 as an example. A compute device in FIG. 5 is the compute device 102 described above.

Step 501: Obtain data distribution input by a user.

In this embodiment, the user inputs the data distribution through a terminal device, and the compute device receives the data distribution sent by the terminal device. The data distribution is distribution to which an input activation value of each network layer of a floating-point model conforms, in other words, the input activation values of all the network layers conform to the data distribution. For example, the data distribution is normal distribution or Poisson distribution.

In an optional manner, if the pre-trained floating-point model is obtained by the compute device through training, the user may not provide the floating-point model. This is equivalent to that after obtaining the floating-point model through training, the compute device provides an input interface for the user, the user uploads, through the input interface, the data distribution of the input activation value, and the compute device receives the data distribution. If the pre-trained floating-point model is not obtained by the compute device through training, the compute device provides an input interface for the user, and the user uploads the pre-trained floating-point model and the data distribution of the input activation value through the input interface.

In an optional manner, the user further inputs a quantity n of quantization bits through the terminal device, where the quantity of quantization bits represents a quantity of bits of each quantized input activation value, and the compute device obtains the quantity n of quantization bits.

Step 502: Input random data into the floating-point model to obtain the input activation value of each network layer.

In this embodiment, the compute device stores random data, where the random data is commonly used data that enables the input activation values of all the network layers to conform to the data distribution input by the user. Alternatively, the compute device stores random data, where the random data corresponds to data distribution, and the compute device obtains, from the stored random data, random data that conforms to the data distribution input by the user. Alternatively, the compute device generates, based on the data distribution, random data that conforms to the data distribution, and the compute device inputs the random data into the floating-point model, and performs forward inference, to obtain the input activation value of each network layer of the floating-point model. For a 1st network layer in a plurality of network layers that are sequentially connected in the floating-point model, an input activation value of the network layer may be a feature of the random data. For any network layer in the plurality of network layers other than the 1st network layer, an input activation value of the network layer is feature data output by a previous network layer of the network layer.

Step 503: Perform statistical analysis on the input activation value of each network layer based on the data distribution, to obtain a data range of the input activation value of each network layer.

In this embodiment, the data distribution input by the user is the data distribution to which the input activation values of all the network layer conform. For any network layer, the compute device determines, by using the data distribution, a maximum value and a minimum value of an input activation value of the network layer, to obtain a data range of the input activation value. For example, the data distribution is normal distribution. For a $k^{th}$ network layer of the floating-point model, parameters $\mu$ and $\sigma$ of the normal distribution may be calculated based on an input activation value of the $k^{th}$ network layer, where $\mu$ is a mathematical expectation, and $\sigma$ is a standard deviation. In the normal distribution, a probability that data falls within ($\mu$ -3$\sigma$ , $\mu$ +3$\sigma$ ) is 99.74%. Therefore, ($\mu$ -3$\sigma$ , $\mu$ +3$\sigma$ ) may be used as a data range of the input activation value of the $k^{th}$ network layer. $\mu$ -3$\sigma$ is a minimum value of the data range, and $\mu$ +3$\sigma$ is a maximum value of the data range.

With reference to the given quantity n of quantization bits, a range of a quantized value of the input activation value is $[-2^{n-1}, 2^{n-1} - 1]$.

Step 504: Determine a quantization parameter of the input activation value of each network layer based on endpoint values of the data range.

In this embodiment, for any network layer, endpoint values of a data range of the network layer are a maximum value and a minimum value of an input activation value of the network layer, and the compute device determines a quantization parameter of the input activation value of the network layer based on the maximum value and the minimum value. In a case of asymmetric quantization, the quantization parameter includes a scale factor and a quantization offset. In a case of symmetric quantization, the quantization parameter includes a scale factor.

In an optional manner, processing of determining the quantization parameter based on the endpoint values of the data range is as follows:

In the case of asymmetric quantization, the quantization parameter includes the scale factor and the quantization offset. For any network layer, the compute device calculates an initial value of a scale factor corresponding to the network layer by using Formula (3), and calculates an initial value of a quantization offset corresponding to the network layer by using Formula (4).

$$scale_1 = \frac{\max\_val - \min\_val}{(2^n - 1)} \qquad (3)$$

$$offset_1 = round\left((-2^{n-1}) - \frac{\min\_val}{scale_1}\right) \qquad (4)$$

In Formula (3) and Formula (4), $scale_1$ represents the scale factor, $max\_val$ represents a maximum value of an input activation value of the network layer, $min\_val$ represents a minimum value of the input activation value of the network layer, n represents the quantity of quantization bits, $offset_1$ represents the quantization offset, and $round$ represents a rounding operation. The rounding operation may be a rounding-to-nearest operation, a rounding up operation, a rounding down operation, or the like.

Then, the compute device uses an initial value of the quantization parameter to perform quantization processing on the input activation value of the network layer by using Formula (5), to obtain a quantized value of the input activation value, performs dequantization processing on the quantized value of the input activation value, to obtain a dequantized value, and calculates a quantization error of the input activation value of the network layer by using Formula (6) or Formula (7). Whether the quantization error is less than or equal to a target value corresponding to the network layer is determined, and if the quantization error is less than or equal to the target value, the initial value of the scale factor is determined as a value of the scale factor, and the initial value of the quantization offset is determined as a value of the quantization offset. If the quantization error is greater than the target value, the initial value of the quantization parameter of the input activation value of the network layer is updated, and the foregoing process continues to be performed until the quantization error of the input activation value of the network layer is less than or equal to the target value, to obtain a value of the quantization parameter of the input activation value of the network layer; or the initial value of the quantization parameter of the input activation value of the network layer is updated until the quantization error of the input activation value of the network layer is minimized, to obtain a value of the quantization parameter of the input activation value of the network layer. The target value may be set based on an actual situation. A larger quantity of input activation values of the network layer indicates a larger set target value, and a smaller quantity of input activation values of the network layer indicates a smaller set target value.

$$A_2 = round(\frac{A_1}{scale_1}) + offset_1 \qquad (5)$$

In Formula (5), $A_2$ represents the quantized value of the input activation value, $A_1$ represents a value of the input activation value before quantization, $scale_1$ represents the scale factor, $offset_1$ represents the quantization offset, and $round$ represents the rounding operation.

$$L(A_1, A_2) = \sqrt{\sum_{i=1}^{m}(A_{1i} - A_{2i})^2 / m} \qquad (6)$$

$$L(A_1, A_2) = \frac{\sum_{i=1}^{m}|A_{1i} - A_{2i}|}{m} \qquad (7)$$

In Formula (6), $L(A_1, A_2)$ represents the quantization error, $A_{1i}$ represents a value of an $i^{th}$ input activation value before quantization, where i is an integer less than or equal to m, $A_{2i}$ represents a value obtained by dequantizing a quantized value of the $i^{th}$ input activation value, where the value obtained through dequantization is a floating-point number, and m represents a quantity of input activation values of the network layer.

Optionally, in the case of asymmetric quantization, the compute device may determine the scale factor and the quantization offset in an alternate update manner. For example, for any network layer, when the scale factor is the initial value, the input activation value of the network layer is quantized based on the initial value of the scale factor and the initial value of the quantization offset, to obtain the quantized value of the input activation value of the network layer. Refer to Formula (5).

Then, the compute device dequantizes the quantized value, and calculates the quantization error corresponding to the network layer by using Formula (6) or Formula (7). The compute device increases the initial value of the quantization offset by a first adjustment amplitude, substitutes the initial value of the scale factor and an adjusted quantization offset into Formula (5), performs quantization processing on the input activation value of the network layer to obtain the quantized value of the input activation value of the network layer, and calculates the quantization error corresponding to the network layer by using Formula (6) or Formula (7). The compute device determines whether the quantization error is minimized or less than or equal to the target value, and if the quantization error is not minimized or not less than or equal to the target value, the compute device continues to adjust the quantization offset. The rest may be deduced by analogy, until a value of the quantization offset corresponding to a minimum quantization error is obtained, or until a value of the quantization offset corresponding to a quantization error less than or equal to the target value is obtained.

Then, after the quantization offset is obtained, the quantization offset is fixed, and the scale factor is updated, to determine a value of the scale factor corresponding to the minimum quantization error, or a value of the scale factor corresponding to the quantization error less than or equal to the target value. A process of updating the scale factor is similar to a process of updating the quantization offset, and details are not described herein again.

In this way, after the quantization offset and the scale factor are alternately updated a plurality of times, a final scale factor and a final quantization offset are obtained.

In the case of symmetric quantization, a target quantization parameter includes a scale factor. For any network layer, the compute device obtains, through calculation by using Formula (3), an initial value of the scale factor corresponding to the network layer. For any network layer, only the scale factor corresponding to the network layer is adjusted. This is equivalent to that a value of the quantization offset is 0. For a process of determining the scale factor, refer to asymmetric quantization processing. Details are not described herein again.

Step 505: During inference by using the floating-point model, perform, by using the quantization parameter of the input activation value of each network layer, quantization processing on the input activation value generated during inference of each network layer.

In this embodiment, for each network layer, quantization parameters of all input activation values of the network layer are the same. During subsequent inference by using the floating-point model, after inference data is input into the floating-point model, the input activation value of each network layer is obtained, quantization processing is performed on the input activation value of the network layer by using the quantization parameter of the input activation value of the network layer, and then inference calculation is performed. In this way, the floating-point input activation value is converted into an integer input activation value, so that a calculation amount can be reduced.

A device for performing step 505 and a device for performing step 501 to step 504 may be a same device, or may be different devices. For example, the compute device determines the quantization parameter of the input activation value, and performs inference. For another example, after the quantization parameter of the input activation value is obtained based on the procedure shown in FIG. 5, the compute device returns the quantization parameter to the terminal device, and the terminal device stores the quantization parameter. During subsequent inference, the terminal device quantizes the input activation value by using the quantization parameter, so that a calculation amount of the input activation value can be reduced.

According to the procedure shown in FIG. 5, when model quantization is performed, the user does not need to provide data, user privacy can be protected, and an application scope is wider. In addition, a data generator does not need to be additionally obtained through training, so that resources can be saved and quantization efficiency can be improved.

In a data-free post-training quantization scenario, a quantization parameter of an input activation value is initialized based on data distribution of the input activation value, and precision is higher than that of random estimation. In addition, in the data-free post-training quantization scenario, there is no requirement on a structure of a floating-point model, and a generalization capability is strong.

1.2. Process of optimizing the rounding manner in the input activation value quantization process.

After the quantization parameter is determined, for the input activation value of any network layer, when no disturbance tensor is introduced, quantization rounding processing is performed on the input activation value of the network layer to obtain the quantized value of the input activation value (where quantization processing is performed by using Formula (5), and in the case of symmetric quantization, the value of the quantization offset is 0), and the quantization error of the input activation value of the network layer is calculated by using Formula (6) or Formula (7).

Then, first K input activation values in the network layer that are sorted in descending order of quantization errors are determined, disturbance tensors are introduced for the K input activation values (where for asymmetric quantization, refer to Formula (8), and for symmetric quantization, refer to Formula (9)), quantization rounding is performed on the input activation values of the network layer, to obtain quantized values of the input activation values, and a quantization error of a to-be-adjusted input activation value of the network layer is still calculated by using Formula (6) or Formula (7) (where m represents a quantity of to-be-adjusted input activation values). The disturbance tensor is updated until the quantization error is minimized, and a disturbance tensor corresponding to the minimum quantization error is obtained. Alternatively, whether a quantization error of each to-be-adjusted input activation value is minimized is determined, and if the quantization error is minimized, a disturbance tensor corresponding to the to-be-adjusted input activation value is obtained, or if the quantization error is not minimized, the disturbance tensor is updated until the quantization error of each to-be-adjusted input activation value is minimized, and a disturbance tensor corresponding to the minimum quantization error is obtained. The disturbance tensors corresponding to the K input activation values of the network layer may be the same, may be partially the same, or may be completely different.

$$A_2 = round\left(\frac{A_1}{scale_1} + \Delta_1\right) + offset_1 \qquad (8)$$

$$A_2 = round\left(\frac{A_1}{scale_2} + \Delta_1\right) \qquad (9)$$

In Formula (8) and Formula (9), $\Delta_1$ is the disturbance tensor.

In addition, a principle of introducing the disturbance tensor is as follows: Assuming that the rounding operation is rounding-to-nearest, when a decimal part of an original ratio of the input activation value to the scale factor is less than 5, the disturbance tensor is introduced, and the decimal part is changed to be greater than or equal to 5, to change a value obtained through rounding-to-nearest; or when a decimal part of an original ratio of the input activation value to the scale factor is greater than or equal to 5, the disturbance tensor is introduced, and the decimal part is changed to be less than 5, to change a value obtained through rounding-to-nearest.

It should be noted that, after the quantization parameter is determined, a disturbance tensor is introduced for an input activation value with a large quantization error at each network layer, and a rounding direction is further adjusted, to further reduce the quantization error.

2. Weight value quantization process: The weight value quantization process includes a quantization process of determining a weight value and a process of optimizing a rounding manner.

2.1. The weight value quantization process is as follows:

Weight values in a floating-point model are divided into a plurality of groups, and each group includes one or more weight values. For weight values in each group of the floating-point model, quantization parameters corresponding to the weight values in the group are the same.

In an optional manner, in a case of asymmetric quantization, the quantization parameter corresponding to the weight value in the group is determined according to Formula (10), or in a case of symmetric quantization, the quantization parameter corresponding to the weight value in the group is determined according to Formula (11).

$$\underset{scale_2,offset_2}{\arg\min} L(W_1,W_2) \tag{10}$$

$$\underset{scale_2}{\arg\min} L(W_1,W_2) \tag{11}$$

$L(W_1,W_2)$ represents a quantization error of a weight value in a group, and for an expression, refer to Formula (12). In Formula (10), $\underset{scale_2,offset_2}{\arg\min}$ represents a value of a scale factor $scale_2$ and a value of a quantization offset $offset_2$ corresponding to a minimum quantization error, and $W_2$ is determined by using Formula (13). In Formula (11), $\underset{scale_2}{\arg\min}$ represents a value of $scale_2$ corresponding to the minimum quantization error, and $W_2$ is determined by using Formula (14).

$$L(W_1,W_2) = \sqrt{\sum_{j=1}^{g}(W_{1j} - W_{2j})^2/g} \tag{12}$$

$$W_2 = round\left(\frac{W_1}{scale_2} + \Delta_2\right) + offset_2 \tag{13}$$

$$W_2 = round\left(\frac{W_1}{scale_2} + \Delta_2\right) \tag{14}$$

$$L(W_1,W_2) = \frac{\sum_{j=1}^{g}|W_{1i} - W_{2i}|}{g} \tag{15}$$

In Formula (12) and Formula (15), $W_1$ represents a value of the weight value before quantization, $W_2$ represents a dequantized value of a quantized value of the weight value, $W_{1j}$ represents a value of a j$^{th}$ weight value before quantization, where j is an integer less than or equal to g, $W_{2j}$ represents a dequantized value of a quantized value of the j$^{th}$ weight value, and g represents a quantity of weight values in the group. In Formula (13) and Formula (14), $scale_2$ represents a scale factor of the weight value, $offset_2$ represents a quantization offset of the weight value, $round$ represents a rounding operation, where the rounding operation may be rounding-to-nearest, rounding up, or rounding down, and $\Delta_2$ represents a disturbance tensor below, where a value is 0 herein.

In Formula (10), two parameters: the scale factor $scale_2$ and the quantization offset $offset_2$, need to be adjusted. When the two parameters are adjusted, initial values of the two parameters are preset values. On the premise that $scale_2$ is fixed, $offset_2$ is adjusted to minimize the quantization error $L(W_1,W_2)$ of the weight value in the group, then $offset_2$ is fixed to $offset_2$ corresponding to minimum $L(W_1,W_2)$, and $scale_2$ is adjusted to minimize $L(W_1,W_2)$ until a quantity of times of performing this process reaches a preset quantity of times, and $scale_2$ and $offset_2$ in the process performed for the last time are determined as final quantization parameters. The preset quantity is set according to an empirical value, for example, 10.

In another optional manner, during adjustment of the quantization parameter of the weight value, when $L(W_1,W_2)$ is less than or equal to a target value, it may also be considered that it is determined to obtain the quantization parameter.

For the weight value in each group, after the quantization parameter is determined, quantization processing is performed by using the quantization parameter, to obtain the quantized value of the weight value.

2.2. A process of optimizing a rounding manner and performing quantization based on an optimized rounding manner.

After the quantization parameter of the weight value in each group is determined, a quantization error of a part of weight value in each group may be large. To further reduce the quantization error of the part of weight value, a quantization process based on the optimized rounding manner is performed. Refer to step 601 to step 603 in FIG. 6. A procedure shown in FIG. 6 is described by using the system architecture shown in FIG. 2 as an example, and a compute device in FIG. 6 is the compute device 102 described above.

Step 601: For the weight value in each group in the floating-point model, determine disturbance tensors corresponding to to-be-adjusted weight values in the group during quantization rounding.

In this embodiment, for the weight value in any group, when no disturbance tensor is introduced, in the case of asymmetric quantization, the quantized value (where $\Delta_2$ is 0) of the weight value is calculated by using Formula (13), or in the case of symmetric quantization, the quantized value (where $\Delta_2$ is 0) of the weight value is calculated by using Formula (14). Quantization rounding is performed on the weight value in the group to obtain the quantized value of the weight value, and Formula (12) or Formula (15) is used to calculate the quantization error of the weight value in the group.

Then, quantization errors of weight values in the group are sorted in descending order, and weight values corresponding to first K quantization errors are determined, where the weight values corresponding to the K quantization errors are the to-be-adjusted weight values. For different groups, a value of K may be different. A larger quantity of weight values in a group indicates a larger value of K. On the contrary, a smaller quantity of weight values in a group indicates a smaller value of K.

Then, disturbance tensors are introduced for the to-be-adjusted weight values in the group. In the case of asymmetric quantization, Formula (13) is used to calculate a quantized value of the to-be-adjusted weight value, or in the case of symmetric quantization, Formula (14) is used to calculate a quantized value of the to-be-adjusted weight value. A quantization error of the to-be-adjusted weight value (where g represents a quantity of to-be-adjusted weight values) is calculated by using Formula (12) or Formula (15) until a proper disturbance tensor is selected, so that the quantization error is minimized. This process is represented by Formula (16). Alternatively, whether a quantization error of each to-be-adjusted weight value is minimized is determined, and if the quantization error is minimized, a disturbance tensor corresponding to the to-be-adjusted weight value is obtained, or if the quantization error is not minimized, the disturbance tensor is updated until the quantization error of each to-be-adjusted weight value is minimized, and a disturbance tensor corresponding to the minimum quantization error is obtained. For any group, disturbance tensors corresponding to to-be-adjusted weight values in the group may be the same, may be partially the same, or may be completely different.

$$\arg\min_{\Delta_2} L\left(W_1,W_2\right) \qquad (16)$$

In Formula (16), $\arg\min\limits_{\Delta_2}$ represents a value of $\Delta_2$ corresponding to the minimum quantization error. For an expression of $L(W_1,W_2)$, refer to Formula (12) or Formula (15).

It should be noted that a principle of introducing the disturbance tensor is as follows: Assuming that the rounding operation is rounding-to-nearest, when a decimal part of an original ratio of the weight value to a scale factor is less than 5, the disturbance tensor is introduced, and the decimal part is changed to be greater than or equal to 5, to change a value obtained through rounding-to-nearest; or when a decimal part of an original ratio of the weight value to a scale factor is greater than or equal to 5, the disturbance tensor is introduced, and the decimal part is changed to be less than 5, to change a value obtained through rounding-to-nearest.

Step 602: Determine a ratio of the to-be-adjusted weight value to a corresponding scale factor.

Step 603: Perform rounding processing on a sum of the ratio and the disturbance tensor to obtain a rounding result, and in the case of asymmetric quantization, update a sum of the rounding result and a quantization offset corresponding to the to-be-adjusted weight value to a quantized value of the to-be-adjusted weight value, or in the case of symmetric quantization, update the rounding result to a quantized value of the to-be-adjusted weight value.

In this embodiment, in the case of asymmetric quantization, Formula (13) is used to calculate the quantized value of the to-be-adjusted weight value, or in the case of symmetric quantization, Formula (14) is used to calculate the quantized value of the to-be-adjusted weight value.

In Formula (13) and Formula (14), $\dfrac{W_1}{scale_2}$ represents the ratio of the to-be-adjusted weight value to the scale factor.

For a to-be-adjusted weight value in any group, quantization processing may be performed on the to-be-adjusted weight value by using a procedure shown in FIG. 6.

In an optional manner, there are a plurality of manners of grouping the weight values in the floating-point model, and two feasible manners are provided below.

Manner 1: The weight values in the floating-point model are grouped based on channels to which the weight values belong, and weight values belonging to a same channel are grouped into a same group.

For example, a weight value of a convolution layer of the floating-point model is a four-dimensional tensor, and the four-dimensional tensor is represented as $s \times e \times h \times r$. s represents a quantity of output channels of the convolution layer, e represents a quantity of input channels of the convolution layer, and $h \times r$ represents a convolution kernel of $h \times r$. During quantization, $e \times h \times r$ weight values are in a group.

Manner 2: The weight values in the floating-point model are grouped based on network layers to which the weight values belong, and weight values belonging to a same network layer are grouped into a same group.

In this embodiment of this application, when the weight value is quantized, a quantization error is minimized or less than or equal to the target value is used as a constraint condition. Quantizing the weight value can reduce an error caused by quantization, and increase inference accuracy of a quantized model.

In this embodiment of this application, a product that may be involved includes a model compression tool, an inference model deployment tool, or the like. Subsequently, when determining whether infringement exists, it is possible to determine whether infringement exists through the following methods:

1. Based on an input of post-training quantization, check whether data needs to be input and whether data distribution of an input activation value is required.
2. Analyze a model compression process and logs to check whether a dataset is used during quantization, whether additional data processing steps are performed, and whether quantization parameters for calculating input activation values of different random data need to be initialized for different data distribution.
3. Check, based on functions released by a model compression tool, whether the model compression tool is integrated with the foregoing data-free post-training quantization procedure.

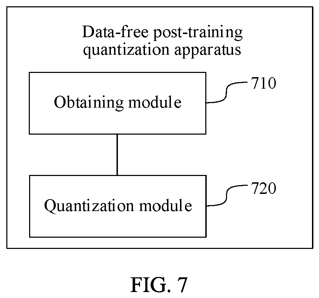

FIG. 7 is a diagram of a structure of a data-free post-training quantization apparatus according to an embodiment of this application. The apparatus may be implemented as a part of the apparatus or an entire apparatus by using software, hardware, or a combination thereof. The apparatus provided in this embodiment of this application may implement the procedures in FIG. 4 to FIG. 6 in embodiments of this application. The apparatus includes an obtaining module 710 and a quantization module 720.

The obtaining module 710 is configured to obtain data distribution input by a user, where the data distribution is distribution to which an input activation value of each network layer of a floating-point model conforms. The obtaining module 710 may be specifically configured to implement an obtaining function in step 501 and perform an implicit step included in step 501.

The quantization module 720 is configured to:

input random data into the floating-point model to obtain the input activation value of each network layer;
perform statistical analysis on the input activation value of each network layer based on the data distribution, to obtain a data range of the input activation value of each network layer;
determine a quantization parameter of the input activation value of each network layer based on endpoint values of the data range; and
during inference by using the floating-point model, perform, by using the quantization parameter of the input activation value of each network layer, quantization processing on the input activation value generated during inference of each network layer. The quantization module 720 may be specifically configured to implement an input activation value quantization function in step 502 to step 505 and perform an implicit step included in step 502 to step 505.

In an optional manner, the quantization module 720 is configured to:

for each network layer of the floating-point model, determine an initial value of the quantization parameter of the input activation value of the network layer based on the endpoint values of the data range of the input activation value of the network layer;
perform quantization processing on the input activation value of the network layer based on the initial value of the quantization parameter, to obtain a quantized input activation value;

determine a quantization error of the input activation value of the network layer based on the quantized input activation value and the input activation value of the network layer; and

update the initial value of the quantization parameter of the input activation value of the network layer until the quantization error of the input activation value of the network layer is less than or equal to a target value or is minimized, to obtain a value of the quantization parameter of the input activation value of the network layer.

In an optional manner, the quantization parameter includes a scale factor and a quantization offset.

The quantization module 720 is configured to:

when the scale factor is an initial value, update the quantization offset until the quantization error of the input activation value of the network layer is less than or equal to the target value or is minimized, to obtain a value of the quantization offset; and

when update of the quantization offset is completed, update the scale factor until the quantization error of the input activation value of the network layer is less than or equal to the target value or is minimized, to obtain a value of the scale factor.

In an optional manner, the quantization module 720 is further configured to:

for each group of the floating-point model, determine a quantization parameter corresponding to the group, where in a case of asymmetric quantization, the quantization parameter corresponding to the group includes a scale factor and a quantization offset, or in a case of symmetric quantization, the quantization parameter corresponding to the group includes a scale factor; and

perform quantization processing on a weight value in the group based on the quantization parameter corresponding to the group, to obtain a quantized value of the weight value in the group.

In an optional manner, the quantization module 720 is further configured to:

determine disturbance tensors corresponding to to-be-adjusted weight values in the group during quantization rounding, where the to-be-adjusted weight values are first K weight values sorted in descending order of quantization errors during quantization in the group, and the disturbance tensor is used to adjust a rounding direction during quantization rounding of the to-be-adjusted weight values;

determine a ratio of the to-be-adjusted weight value to a corresponding scale factor; and

perform rounding processing on a sum of the ratio and the disturbance tensor to obtain a rounding result, and in the case of asymmetric quantization, update a sum of the rounding result and a quantization offset corresponding to the to-be-adjusted weight value to a quantized value of the to-be-adjusted weight value, or in the case of symmetric quantization, update the rounding result to a quantized value of the to-be-adjusted weight value.

In an optional manner, the obtaining module 710 is configured to:

group weight values in the floating-point model based on channels to which the weight values belong, where weight values in a same channel belong to one group.

For a detailed process in which the data-free post-training quantization apparatus performs input activation value quantization shown in FIG. 7, refer to the descriptions in the foregoing embodiments. Details are not described herein again. The data-free post-training quantization apparatus shown in FIG. 7 is the compute device 102 in FIG. 1 and FIG. 2.

In an optional manner, a computer program product is provided. The computer program product includes computer instructions, and the computer instructions are stored in a computer-readable storage medium. A processor of a compute device reads the computer instructions from the computer-readable storage medium, and the processor executes the computer instructions, so that the compute device performs the procedures shown in FIG. 4 to FIG. 6.

A person of ordinary skill in the art may be aware that, in combination with the examples described in embodiments disclosed in this application, method steps and units may be implemented by using electronic hardware, computer software, or a combination thereof. To clearly describe interchangeability between the hardware and the software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

In the several embodiments provided in this application, it should be understood that the disclosed system architecture, apparatus, and method may be implemented in other manners. For example, the foregoing described apparatus embodiments are merely examples. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, modules in embodiments of this application may be integrated into one processing module, or each of the modules may exist alone physically, or two or more modules may be integrated into one module. The integrated module may be implemented in a form of hardware, or may be implemented in a form of a software module.

If the integrated module is implemented in a form of a software functional module and sold or used as an independent product, the integrated module may be stored in a computer-readable storage medium. Based on this understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a portable hard drive, a ROM, a RAM, a magnetic disk, or an optical disc.

In this application, the term "a plurality of" means two or more.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1.  A data-free post-training quantization method, wherein the method comprises:

    obtaining data distribution input by a user, wherein the data distribution is distribution to which an input activation value of each network layer of a floating-point model conforms;
    inputting random data into the floating-point model to obtain the input activation value of each network layer;
    performing statistical analysis on the input activation value of each network layer based on the data distribution, to obtain a data range of the input activation value of each network layer;
    determining a quantization parameter of the input activation value of each network layer based on endpoint values of the data range; and
    during inference by using the floating-point model, performing, by using the quantization parameter of the input activation value of each network layer, quantization processing on the input activation value generated during inference of each network layer.

2.  The method according to claim 1, wherein the determining the quantization parameter of the input activation value of each network layer based on the endpoint values of the data range comprises:

    for each network layer of the floating-point model, determining an initial value of the quantization parameter of the input activation value of the network layer based on the endpoint values of the data range of the input activation value of the network layer;
    performing quantization processing on the input activation value of the network layer based on the initial value of the quantization parameter, to obtain a quantized input activation value;
    determining a quantization error of the input activation value of the network layer based on the quantized input activation value and the input activation value of the network layer; and
    updating the initial value of the quantization parameter of the input activation value of the network layer until the quantization error of the input activation value of the network layer is less than or equal to a target value or is minimized, to obtain a value of the quantization parameter of the input activation value of the network layer.

3.  The method according to claim 2, wherein the quantization parameter comprises a scale factor and a quantization offset, and

the updating the initial value of the quantization parameter of the input activation value of the network layer until the quantization error of the input activation value of the network layer is less than or equal to the target value or is minimized, to obtain the value of the quantization parameter of the input activation value of the network layer comprises:

when the scale factor is an initial value, updating the quantization offset until the quantization error of the input activation value of the network layer is less than or equal to the target value or is minimized, to obtain a value of the quantization offset; and

when update of the quantization offset is completed, updating the scale factor until the quantization error of the input activation value of the network layer is less than or equal to the target value or is minimized, to obtain a value of the scale factor.

4. The method according to any one of claims 1 to 3, wherein the method further comprises:

for each group of the floating-point model, determining a quantization parameter corresponding to the group, wherein in a case of asymmetric quantization, the quantization parameter corresponding to the group comprises a scale factor and a quantization offset, or in a case of symmetric quantization, the quantization parameter corresponding to the group comprises a scale factor; and

performing quantization processing on a weight value in the group based on the quantization parameter corresponding to the group, to obtain a quantized value of the weight value in the group.

5. The method according to claim 4, wherein the method further comprises:

determining disturbance tensors corresponding to to-be-adjusted weight values in the group during quantization rounding, wherein the to-be-adjusted weight values are first K weight values sorted in descending order of quantization errors during quantization in the group, and the disturbance tensor is used to adjust a rounding direction during quantization rounding of the to-be-adjusted weight values;

determining a ratio of the to-be-adjusted weight value to a corresponding scale factor; and

performing rounding processing on a sum of the ratio and the disturbance tensor to obtain a rounding result, and in the case of asymmetric quantization, updating a sum of the rounding result and a quantization offset corresponding to the to-be-adjusted weight value to a quantized value of the to-be-adjusted weight value, or in the case of symmetric quantization, updating the rounding result to a quantized value of the to-be-adjusted weight value.

6. The method according to claim 4 or 5, wherein the method further comprises:

grouping weight values in the floating-point model based on channels to which the weight values belong, wherein weight values in a same channel belong to one group.

7. A data-free post-training quantization apparatus, wherein the apparatus comprises:

an obtaining module, configured to obtain data distribution input by a user, wherein the data distribution is distribution to which an input activation value of each network layer of a floating-point model conforms; and

a quantization module, configured to:

input random data into the floating-point model to obtain the input activation value of each network layer;

perform statistical analysis on the input activation value of each network layer based on the data distribution, to obtain a data range of the input activation value of each network layer;

determine a quantization parameter of the input activation value of each network layer based on endpoint values of the data range; and

during inference by using the floating-point model, perform, by using the quantization parameter of the input activation value of each network layer, quantization processing on the input activation value generated during inference of each network layer.

8. The apparatus according to claim 7, wherein the quantization module is configured to:

for each network layer of the floating-point model, determine an initial value of the quantization parameter of the input activation value of the network layer based on the endpoint values of the data range of the input activation value of the network layer;

perform quantization processing on the input activation value of the network layer based on the initial value of the quantization parameter, to obtain a quantized input activation value;

determine a quantization error of the input activation value of the network layer based on the quantized input activation value and the input activation value of the network layer; and

update the initial value of the quantization parameter of the input activation value of the network layer until the quantization error of the input activation value of the network layer is less than or equal to a target value or is minimized, to obtain a value of the quantization parameter of the input activation value of the network layer.

9. The apparatus according to claim 8, wherein the quantization parameter comprises a scale factor and a quantization offset, and

the quantization module is configured to:

when the scale factor is an initial value, update the quantization offset until the quantization error of the input activation value of the network layer is less than or equal to the target value or is minimized, to obtain a value of the quantization offset; and

when update of the quantization offset is completed, update the scale factor until the quantization error of the input activation value of the network layer is less than or equal to the target value or is minimized, to obtain a value of the scale factor.

10. The apparatus according to any one of claims 7 to 9, wherein the quantization module is further configured to:

for each group of the floating-point model, determine a quantization parameter corresponding to the group, wherein in a case of asymmetric quantization, the quantization parameter corresponding to the group comprises a scale factor and a quantization offset, or in a case of symmetric quantization, the quantization parameter corresponding to the group comprises a scale factor; and

perform quantization processing on a weight value in the group based on the quantization parameter corresponding to the group, to obtain a quantized value of the weight value in the group.

11. The apparatus according to claim 10, wherein the quantization module is further configured to:

determine disturbance tensors corresponding to to-be-adjusted weight values in the group during quantization rounding, wherein the to-be-adjusted weight values are first K weight values sorted in descending order of quantization errors during quantization in the group, and the disturbance tensor is used to adjust a rounding direction during quantization rounding of the to-be-adjusted weight values;

determine a ratio of the to-be-adjusted weight value to a corresponding scale factor; and

perform rounding processing on a sum of the ratio and the disturbance tensor to obtain a rounding result, and in the case of asymmetric quantization, update a sum of the rounding result and a quantization offset corresponding to the to-be-adjusted weight value to a quantized value of the to-be-adjusted weight value, or in the case of symmetric quantization, update the rounding result to a quantized value of the to-be-adjusted weight value.

12. The apparatus according to claim 10 or 11, wherein the obtaining module is configured to:
group weight values in the floating-point model based on channels to which the weight values belong, wherein weight values in a same channel belong to one group.

13. A compute device, wherein the compute device comprises a processor and a storage, wherein

the storage stores computer instructions; and

the processor executes the computer instructions, to cause the compute device to perform the method according to any one of claims 1 to 6.

14. A computer-readable storage medium, wherein the computer-readable storage medium stores computer instructions, and when the computer instructions in the computer-readable storage medium are executed by a compute device, the compute device is caused to perform the method according to any one of claims 1 to 6.

FIG. 1

FIG. 2

300

303

Storage

Program code
3031

Operating
system

301

Processor

Communication 302
bus

304

Network interface

FIG. 3

Pre-trained
floating-point
model

Data
distribution

Activation value
quantization

Post-training
quantization

Weight value
quantization

Quantized
model

FIG. 4

| Obtain data distribution input by a user | 501 |

↓

| Input random data into a floating-point model to obtain an input activation value of each network layer | 502 |

↓

| Perform statistical analysis on the input activation value of each network layer based on the data distribution, to obtain a data range of the input activation value of each network layer | 503 |

↓

| Determine a quantization parameter of the input activation value of each network layer based on endpoint values of the data range | 504 |

↓

| During inference by using the floating-point model, perform, by using the quantization parameter of the input activation value of each network layer, quantization processing on the input activation value generated during inference of each network layer | 505 |

FIG. 5

| For a weight value in each group in a floating-point model, determine disturbance tensors corresponding to to-be-adjusted weight values in the group during quantization rounding | 601 |

↓

| Determine a ratio of the to-be-adjusted weight value to a corresponding scale factor | 602 |

↓

| Perform rounding processing on a sum of the ratio and the disturbance tensor to obtain a rounding result, and in a case of asymmetric quantization, update a sum of the rounding result and a quantization offset corresponding to the to-be-adjusted weight value to a quantized value of the to-be-adjusted weight value, or in a case of symmetric quantization, update the rounding result to a quantized value of the to-be-adjusted weight value | 603 |

FIG. 6

Data-free post-training
quantization apparatus

Obtaining module ⌐710

Quantization module ⌐720

FIG. 7

## INTERNATIONAL SEARCH REPORT

| International application No. |
| --- |
| **PCT/CN2024/103661** |

**A. CLASSIFICATION OF SUBJECT MATTER**

G06N5/04(2023.01)i; G06N3/08(2023.01)i; G06N3/06(2006.01)i; G06N3/048(2023.01)i

According to International Patent Classification (IPC) or to both national classification and IPC

**B. FIELDS SEARCHED**

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 训练后量化, 数据分局, 正态分布, 泊松分布, 无数据, 深度学习模型, 浮点模型, PTQ, data split, normal distribution, poisson distribution, no data, free data, deep learning model, floating point model

**C. DOCUMENTS CONSIDERED TO BE RELEVANT**

| Category* | Citation of document, with indication, where appropriate, of the relevant passages | Relevant to claim No. |
| --- | --- | --- |
| A | CN 116258190 A (HUAWEI TECHNOLOGIES CO., LTD.) 13 June 2023 (2023-06-13) description, paragraphs [0046]-[0141], and figures 1-7 | 1-14 |
| A | CN 115688878 A (SOPHGO TECHNOLOGIES LTD.) 03 February 2023 (2023-02-03) entire document | 1-14 |
| A | CN 111950716 A (UNISOUND AI TECHNOLOGY CO., LTD. et al.) 17 November 2020 (2020-11-17) entire document | 1-14 |
| A | CN 114187373 A (SAMSUNG ELECTRONICS CO., LTD.) 15 March 2022 (2022-03-15) entire document | 1-14 |
| A | CN 114841339 A (MIDEA GROUP (SHANGHAI) CO., LTD. et al.) 02 August 2022 (2022-08-02) entire document | 1-14 |
| A | CN 114897155 A (BEIJING INSTITUTE OF TECHNOLOGY) 12 August 2022 (2022-08-12) entire document | 1-14 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 September 2024** | **23 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/103661** |

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| A | CN 115034387 A (SHANGHAI JIAO TONG UNIVERSITY et al.) 09 September 2022 (2022-09-09)<br>entire document | 1-14 |
| A | CN 115952855 A (SPREADTRUM COMMUNICATIONS (SHANGHAI) CO., LTD.) 11 April 2023 (2023-04-11)<br>entire document | 1-14 |
| A | KR 20210100855 A (LG ELECTRONICS INC.) 18 August 2021 (2021-08-18)<br>entire document | 1-14 |

Form PCT/ISA/210 (second sheet) (July 2022)

**INTERNATIONAL SEARCH REPORT**
Information on patent family members

International application No.

**PCT/CN2024/103661**

| Patent document cited in search report | | | Publication date (day/month/year) | Patent family member(s) | | | Publication date (day/month/year) |
|---|---|---|---|---|---|---|---|
| CN | 116258190 | A | 13 June 2023 | None | | | |
| CN | 115688878 | A | 03 February 2023 | None | | | |
| CN | 111950716 | A | 17 November 2020 | None | | | |
| CN | 114187373 | A | 15 March 2022 | US | 2022083855 | A1 | 17 March 2022 |
| | | | | TW | 202213193 | A | 01 April 2022 |
| | | | | DE | 102021116436 | A1 | 17 March 2022 |
| | | | | KR | 20220036330 | A | 22 March 2022 |
| CN | 114841339 | A | 02 August 2022 | None | | | |
| CN | 114897155 | A | 12 August 2022 | None | | | |
| CN | 115034387 | A | 09 September 2022 | None | | | |
| CN | 115952855 | A | 11 April 2023 | None | | | |
| KR | 20210100855 | A | 18 August 2021 | None | | | |

Form PCT/ISA/210 (patent family annex) (July 2022)